# EUROPEAN PATENT APPLICATION

(11) **EP 1 120 712 A1**
(43) Date of publication of application: **01.08.2001**
(21) Application number: 00940913.7
(22) Date of filing: 30.06.2000
(51) Int. Cl.: G06F 13/00, H04L 12/58

(54) **WEB APPLICATION SYSTEM HAVING SESSION MANAGEMENT/DISTRIBUTED MANAGEMENT FUNCTION AND MECHANISM FOR OPERATING THE SAME**

(30) Priority: 30.06.1999 JP 18597999; 31.03.2000 JP 2000101338
(71) Applicant: SUNTORY LIMITED, Osaka-shi, Osaka 530-8203 (JP)
(72) Inventor: KINOSHITA, Shinichi, Suita-shi, Osaka 564-0041 (JP); EZAWA, Takeshi, Hirakata-shi, Osaka 573-0066 (JP)
(74) Representative: Calderbank, Thomas Roger
(86) International application number: JP0004377
(87) International publication number: WO0102964

(57) **Abstract**

The present invention enables session management and distributed management of a web application system (1) by providing a shared memory (14) for storing information for the session management and the distributed management and a management server (12) for performing the session management and the distributed management of the processing server based on said information between web servers (11) of processing servers (2, 2') and application processes (15) in the web application system (1). Further, it enables operations of the web application system (1) by clients (3) by providing in the processing servers (2, 2') operation modules (42) for performing processing concerning the operations of the processing servers (2, 2') in accordance with instructions from the clients (3) and communication modules (43) receiving the instructions from the clients (3) and activating the operation modules (42).

## Description

### TECHNICAL FIELD

The present invention relates to a web application system having functions of session management and distributed management, more particularly relates to a web application system including an operation management mechanism for performing operations such as reading a working status of the web application system, setting a working environment of a processing server, setting a working schedule of an application, and analyzing a log and performance, and an operation management mechanism therefor.

### BACKGROUND ART

In web application systems, when a client accesses a processing server to request processing, the processing server processes the requested processing by using a corresponding application. Further, the processing server returns the data as the result of the processing to the requesting client.

Each company constructs its own such web application system in accordance with the situation of that company. When the web application system is constructed in a closed environment (for example, when the system is constructed within only one company (client)), the system can be administered, maintained, and otherwise managed by customization in accordance with the related client.

However, the applications used in web application systems are becoming more and more diverse. Further, their life cycles are becoming shorter. Therefore, it is very difficult in view of cost and risk for a single company to constantly maintain an application environment sufficient for business. Further, the various types of applications used in web application systems are becoming more and more complex and sophisticated. Therefore, in actuality, it is inherently difficult for a single company (client) to construct its own web application system in view of operation and maintenance.

In view of this situation, along with the rapid development and growth of the Internet and other networks, an increasing practice is for several companies (clients) to share a single web application system through the network (integrated web application system).

In a situation (i) where a large number of companies or other clients successively access a certain application utilizing the above integrated web application system, however, if a certain client makes a current request for processing following a previous request, the processing server ordinarily processes it by a session different from the previous request. Namely, the session is once ended, and a new session is started.

Explaining this in further detail, in a web application system, when a client accesses a server and requests processing, the server performs the requested processing by using an application and sends the resultant data to the client. In this case, the conventional web application system uses a protocol, referred to as an HTTP (Hyper Text Transfer Protocol), using a CGI (Common Gateway Interface). In this protocol, the session is ended at the point of time when the server returns the data requested by the client. Further, as a method enabling session management, there is known the method of using an extended unique API (Application Programming Interface) (for example, a web server of Netscape Communication Corp. or a web server of Microsoft Corp.).

As explained above, in a situation where a large number of companies or other clients successively access a certain application if a certain client makes a current request for processing following a previous request, the session is once ended, and a new session is started.

As a result, when performing processing based on a plurality of requests such as processing spanning several web pages, the client must hold the resultant data of the processing obtained by the previous request. For example, in a business system, all the clients must hold the information on the session management and next processing content by the conversation between the processing server and the client (PC), so there arises the inconvenience that the limit of the processing capability ends up being exceeded or the required time becomes large.

Further, in a situation (ii) where a large number of companies or other clients access a variety of applications utilizing an integrated web application system explained above, since a single processing server centrally performs the processing, the processing server must be a large sized one having a large capacity in order to handle simultaneous reception of accesses from a large number of clients. However, concentration of the processing in a single large sized server in such a way is problematic in view of the security and the reliability of the entire system and also in view of the expandability of the system.

There are very few examples at present of an integrated web application system capable of solving the problems explained in (i) and (ii) above being efficiently and economically realized and actually operated.

In view of the above technical background, there are several problems a) to d) as will be explained in detail later.
a) In a system using a conventional CGI, as already explained, when the same client makes a next request, the server processes it by a session different from that for the previous request. Namely, the session once ends, and a new session is started. As a result, when performing processing based on a plurality of requests such as processing spanning several web pages, the client must hold the resultant data of the processing obtained by the previous request. For example, in a company system (business system), the clients must hold the whole information on the session management and next processing content by the conversation between the processing server and the PC (client), so there arises the problem that a limit arises in the processing capability and the required time becomes large.
b) Further, in the transfer of information between the web server and the application process, it is necessary to always transfer all information, so the efficiency is very bad and in turn a reduction of the response speed is induced. Further, in a method using the extended unique API, the application is started up on the same process as that for the web server, so although the reaction speed becomes fast, an API dedicated especially for the web server must be used, so there are the problems that other applications cannot be utilized and any problems arising in the application will affect the system as a whole.
c) On the other hand, when a single server centrally performs the processing, a server having a large capacity is provided to handle cases of simultaneous access from a plurality of clients. If the server can no longer be used due to a breakdown or the like, the processing of the entire system becomes impossible and accordingly there is a problem in security.
   If a web application system capable of solving the problems of a) to c) described above could be realized, it is considered that it would be possible to easily realize an integrated web application system as described above.
   Thus, where putting such an integrated web application system into practical use, when the applications become complex and sophisticated, it becomes necessary to enable all of a large number of clients having a right of control to freely perform operations on the web application system.
d) However, establishment of a mechanism enabling a large number of clients to individually perform operations on the system in order to satisfy this need would mean a considerably large scale mechanism for the operation. This would become considerably uneconomical from the viewpoint of maintenance, cost, and operators and would result in the problem of the advantages possessed by the above integrated web application system being canceled out.

Here, the above "operations" concretely mean for example the clients reading the working status of the integrated web application system, setting the working environment of the processing server, setting the working schedule of the application, and analyzing the log and performance. Individual clients have to be able to easily set the environment in accordance with the processing status and read various statuses without large scale mechanisms being provided for individual clients. In addition, operations have to be able to be executed by a simple operation while maintaining the secrecy of the individual clients.

### DISCLOSURE OF THE INVENTION

Therefore, the present inventors intensively studied the above problems a) to c) and as a result came up with the idea that session management and distributed management of a plurality of servers were necessary for solving the problems, developed a new module for both session management and distributed management, and thereby completed the present invention.

Namely, first, an object of the present invention is to enable session management in accordance with requests by a client in a web application system.

Also, second, an object of the present invention is to enable distributed management of servers in a web application system.

Further, the present inventors took note of the above problem d) and intensively studied various types of operation management mechanisms for reading the working status of an integrated web application system, setting the working environment of a processing server, setting the working schedule of applications, and analyzing the log and performance and as a result constructed a mechanism capable of easily performing such operations in accordance with the individual situations by individual instructions from clients having the right of control by introducing both an operation module and a communication module into the web application system and thereby completed the present invention.

Namely, third, an object of the present invention is to enable each client having the right of control with respect to the web application to easily perform various types of operations such as reading various types of statuses and setting the environment thereon independently.

To achieve the first and second objects, according to the present invention, there is provided a web application system wherein provision is made of a shared memory for storing information for session management and a session management server between a web server and an application process on a server.

According to the present invention, further, the session management server can also function as a distributed management server.

To achieve the third object, there is provided an operation management mechanism for performing an operation with respect to a web application system wherein provision is made of an operation module linked with the processing server and performing processing concerning an operation in accordance with an instruction from a client and a communication module for communication for receiving an instruction from a client and activation of the operation module by this instruction.

### BRIEF DESCRIPTION OF THE DRAWINGS

Fig. 1 is a view of the overall configuration of a web application system,
Fig. 2 is a view of the configuration of a computer forming a server,
Fig. 3 is a view of a system configuration of the server,
Fig. 4 is a view of a modular configuration of a DSM server in the system of Fig. 3,
Fig. 5 is a flowchart of the processing in a main processing server of Fig. 3,
Fig. 6 is a flowchart of the processing in a sub processing server of Fig. 3,
Fig. 7 is a view of the basic configuration of a web application system including an operation management mechanism based on the present invention,
Fig. 8 is a view of the concrete construction of a server side operation process module,
Fig. 9 is a view of an example of a basic module comprising a principal portion of the web application system in Fig. 7,
Fig. 10 is a view partially showing the web application system provided with the operation management mechanism (first),
Fig. 11 is a view partially showing the web application system provided with the operation management mechanism (second),
Fig. 12 is a view redrawing the configuration of the principal portion of the system shown in Fig. 10 and Fig. 11 along with the flow of work,
Fig. 13 is a view of a first example of a screen (screen configuration) on a display (upper half),
Fig. 14 is a view of the first example of the screen (screen configuration) on a display (lower half),
Fig. 15 is a view of a second example of a screen (status monitor) on a display (upper half),
Fig. 16 is a view of the second example of the screen (status monitor) on a display (lower half),
Fig. 17 is a view of a third example of a screen (application setting) on the display,
Fig. 18 is a view of a fourth example of a screen (application setting) on the display,
Fig. 19 is a view of a fifth example of a screen (application setting) on the display,
Fig. 20 is a view of a sixth example of a screen (analysis of log information) on the display,
Fig. 21 is a view of a seventh example of a screen (analysis of performance) on the display,
Fig. 22 is a view of an eighth example of a screen (setting of server environment) on the display,
Fig. 23 is a view showing an example of a screen for user authentication on the display, and
Fig. 24 is a view showing an example of screen of a warning window on the display.

### BEST MODE FOR CARRYING OUT THE INVENTION

In the session management system of the present invention, when there is an initial access from a client, the session management module sets a specific ID for the user and stores session information comprised by both that information and the information of the application operated by the server in the shared memory. If the processing for the initial access ends and the client makes a request for next processing for the application spanning the second time or on or for a different application, the module recognizes that it is the access from a user having the same ID based on the information stored in the shared memory and enables processing in the application process the same as that of the previous time. This session management system for managing sessions of processing between requests of the clients and the server handles requests from clients by deciding whether to hold or not hold a session through the session management module. Further, by storing session management information of the clients and process by utilizing the shared memory, realization of a higher efficiency of transfer of information can be achieved. Further, by utilizing this function, it becomes possible to handle a variety of requests from the clients. Further, by separating the web server and the application process, it becomes possible to improve the maintainability of the system.

In another embodiment of the present invention, the web application system is provided with a distributed management server between the web server and the application process on the server.

In the present invention, further, a shared memory may be provided between the web server and the application process, and the distributed management server may also functions as a session management server.

In the distributed management system of the present invention, a main server centrally manages accesses from the client side and assigns processing to sub servers in accordance with their statuses. The main server uses the setting information to monitor accesses from the clients to guide the distribution of the processing to the servers. The types of the application processes in the servers, the number of startups of the settings of the servers, etc. are stored in the shared memory. The main server instructs the distributed processing of the servers in accordance with the setting conditions. The related distributed management system, configured by grouping a plurality of servers into one main server and a plurality of sub servers, becomes possible by the modular function of distributed management of requests from the clients in accordance with the setting conditions.

According to this distributed management system, it is possible to distribute application processing to be executed to a plurality of servers and therefore reduce the load applied on any one server occurring due to simultaneous access by a plurality of clients. Further, when one of the sub servers can no longer be used, the other working servers take over its processing. By this, the security can be raised even at the time of natural disasters, man-made disasters, etc. Further, the present system, which can handle a plurality of servers having relatively low level functions (for example small sized servers) as distributed servers, is more advantageous in views of security and cost than the case of handling web applications by one high performance server (for example a large sized server). Further, the present system can use different types of servers as the main server and the sub servers or the plurality of sub servers, an effective utilization of the current system or current servers becomes easy, and therefore it becomes possible to flexibly construct a new system.

Below, the present invention will be explained in detail by referring to the drawings.

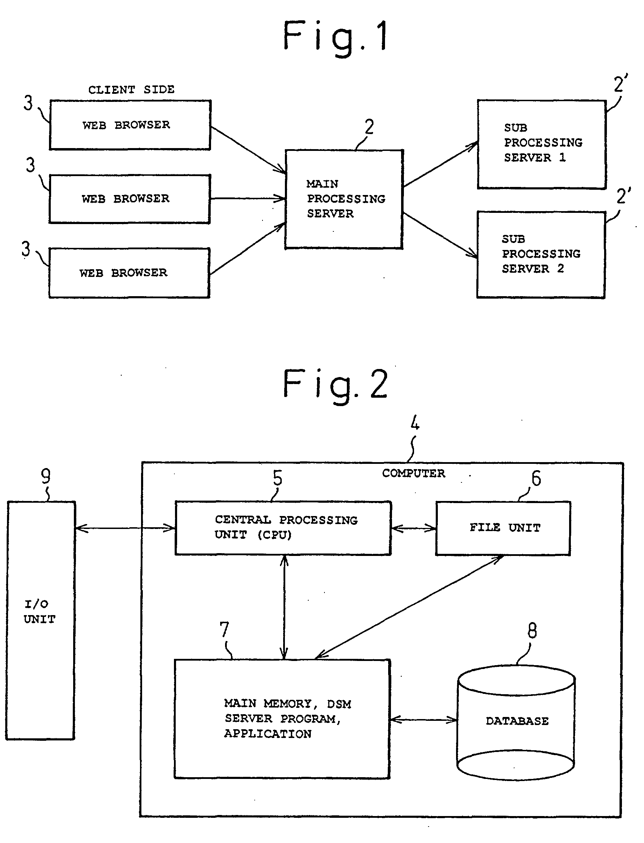

Figure 1 shows an overall configuration of a web application system 1 of the present invention. The server is configured by one main processing server 2 and a plurality of sub processing servers 2'. The main processing server 2 centrally manages accesses from the clients (web browsers) 3 and assigns the processing to the sub processing servers by the setting information on the main server. By this, even in a case where accesses from a plurality of clients 3 are concentrated, it can distribute the load among the sub processing servers 2'.

Figure 2 is a view of the configuration of a computer forming the main processing server 2 and the sub processing servers 2'. The computer 4 is provided with a central processing unit (CPU) 5, a file unit 6 for storing the results of the application process, a main memory 7, and a database 8 and is connected to an I/O unit 9. A DSM (Distributed Session Manager) server program for the distributed session management operates on the main memory 7.

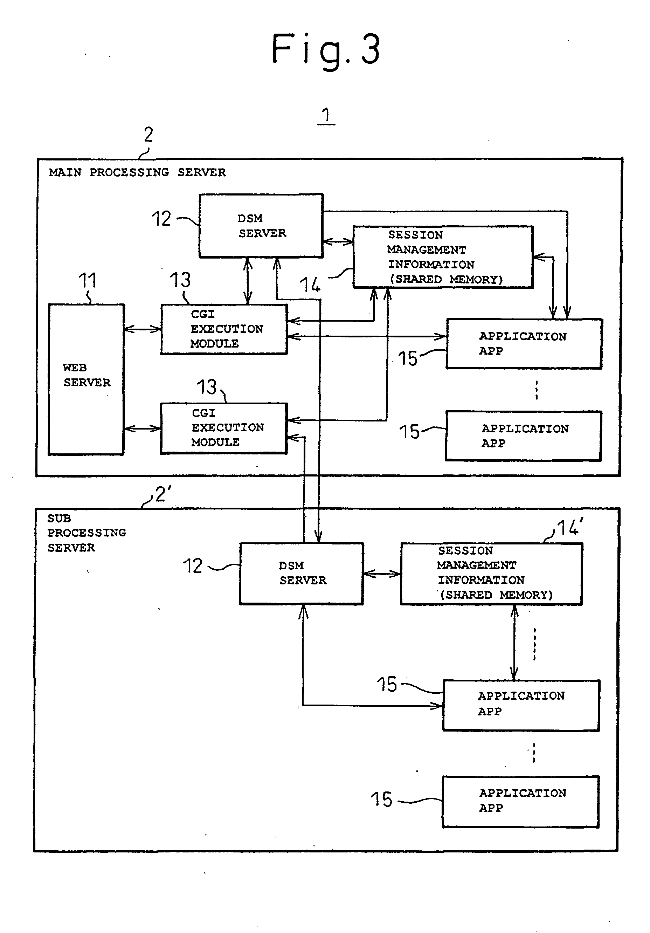

Figure 3 is a view of the system configurations of the main processing server 2 and the sub processing servers 2'.

The main processing server 2 is provided with a web server 11 connected to the clients (browsers) 3 and a plurality of applications (APP) 15. Between the web server 11 and the applications 15, a DSM server 12, CGI execution modules (dsmcgi.exe) 13 activated from the web server 11, and a shared memory 14 are provided. The DSM server 12 is the session management server and distributed management server as well, while the CGI execution module 13 is an interface program between the client side and the application. The shared memory 14 stores the information concerning the distributed management and the information concerning the session management.

Each sub processing server 2' has substantially the same configuration as that of the main processing server 2, but in the present invention, the CGI execution module 13 does not exist in the sub processing server 2', but is provided on the main processing server 2 side. In Fig. 3, only one sub processing server 2' is shown, but a plurality of sub processing servers 2' can be provided. In this case, the main processing server 2 is provided with CGI execution modules 13, including the sub processing servers 2', only enough for handling requests from the clients within a range not exceeding the setting information of the main processing server 2.

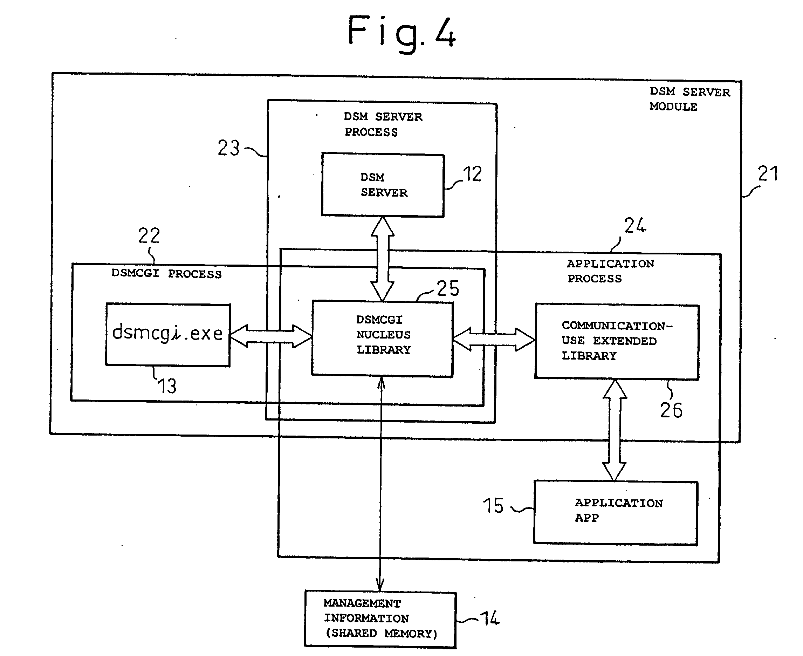

Figure 4 shows the modular structure of the DSM server in the system shown in Fig. 3. A DSM server module 21 is comprised by a DSMCGI process 22, a DSM server process 23, and an application process 24. As the interface, provision is made of a DSMCGI nucleus library 25 for the DSM server 12, CGI execution modules 13, and the shared memory 14 and a communication-use extended library 26 of a specific language for the application 15. The DSMCGI process 22 is comprised by the CGI execution modules 13 and the DSMCGI nucleus library 25 and has a session management function. The DSM server process 23 is comprised by the DSM server 12 and the DSMCGI nucleus library 25 and has the distributed management function. The application process 24 is comprised by the application (APP) 15, the DSMCGI nucleus library 25, and the communication-use extended library 26. Note that, here, the communication-use extended library 26 is comprised separately from the nucleus library 25 and dedicated for various languages. Here, in the session management, information such as the IDs of the clients and the applications 15 with the clients connected thereto for the session management are input through the DSMCGI nucleus library 25 to the shared memory 14 and stored.

Further, in distributed management, the setting conditions such as the status of the main processing server 2, confirmation of the environment of the sub processing server, and the relationships between the sub processing servers 2' and the application 15 are input similarly through the DSMCGI nucleus library 25 to the shared memory 14 and stored.

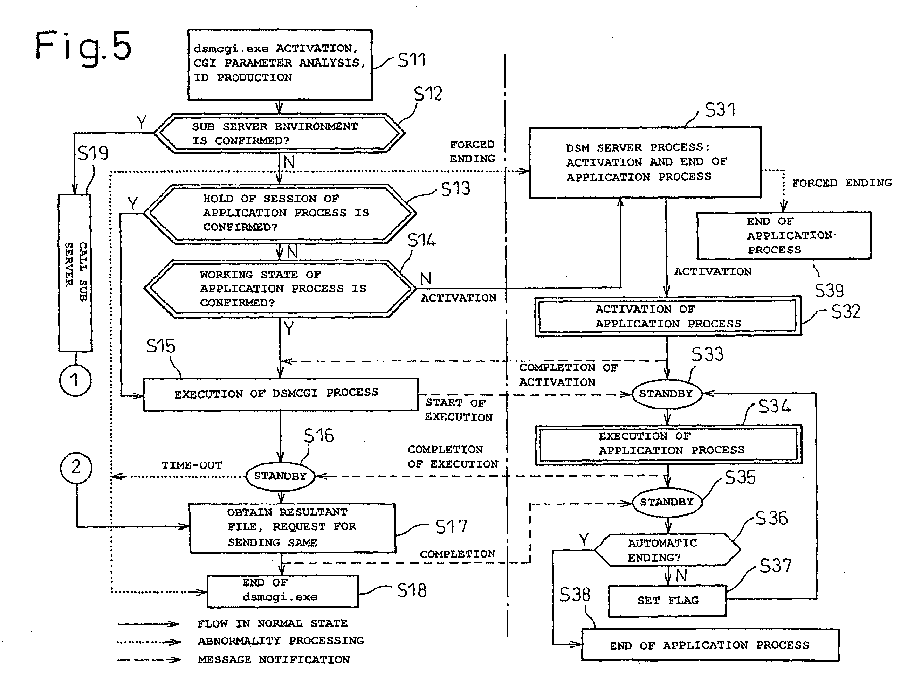

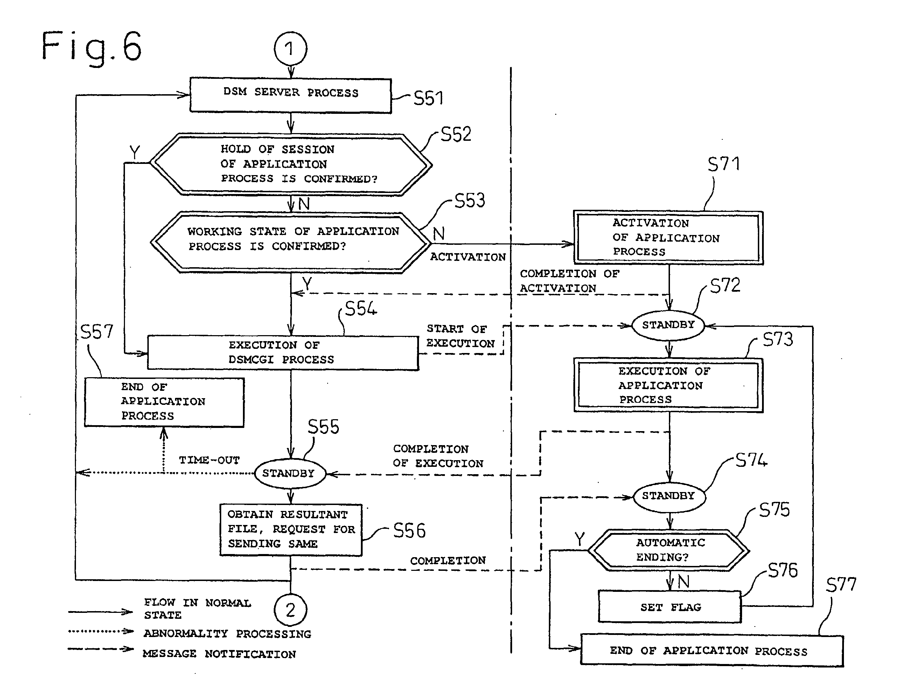

Figure 5 is a flowchart of the processing in the main processing server, while Fig. 6 is a flowchart of the processing in the sub processing servers.

In the figure, a solid line indicates the flow in the normal state, the dotted line shows the flow in abnormality processing state, and the broken line shows the flow of message notification. Further, double line blocks indicate information managed at the shared memory 14. The portion on the left side from the vertically drawn one-dot chain line shows the function of the session management (DSMCGI process), the portion above "standby" of step S33 on the right side shows the function of the distributed management (DSM server process), and the portion below "standby" of step S33 on the right side shows the function of the application process.

First, the processing of the main processing server of Fig. 5 will be explained.

When the main processing server 2 is accessed from a client 3, a CGI execution module (dsmcgi.exe) 13 is activated (step S11). The CGI execution module 13 analyzes the information and CGI parameters existing in the shared memory 14, then prepares an ID for the session management and translates the character code etc. When the current access is the first access from the client 3, it stores the ID for the session management in the shared memory 14.

The CGI execution module 13 then confirms the information concerning the assignment to the sub processing servers 2' based on the information in the shared memory 14 (step S12).

At step S12, based on the information of the shared memory 14, it is decided by which of the main processing server or the sub processing servers the processing is to be carried out. When the processing should be performed in the main processing server (N: No), the processing is carried out at the main processing server 2, therefore the routine proceeds to step S13. When the processing should be performed in a sub processing server (Y: Yes), the processing is handed over to the related sub processing server 2' (step S19).

At step S12, when the current access is a second or following access and also the session is held, since the session management information and the distributed management information related to the ID of the related client 3 are stored in the shared memory 14, it is decided whether the server operated in the previous access was the main processing server 2 or a sub processing server 2'. If it was a sub processing server 2' (Y: Yes), the processing is handed over to the sub processing server 2' (step S19), while if it was the main processing server 2 (N: No), the processing is continued at the main processing server 2, therefore the routine proceeds to step S13.

When it is decided at step S12 that the processing is to be carried out at the main processing server 2 (N), based on the information in the shared memory 14, it is confirmed whether or not its own (2) application process 24 is holding the session (step S13).

At step S13, if the current access is the second or following access and the session has been held (Y), the routine proceeds to step S15. If the current access is the first access or, even if it is the second or following access but the session is not held (N), the routine proceeds to step S14.

At step S14, based on the information in the shared memory 14, the working status of the application process 24 is confirmed. If the required application process 24 has not been operated before the processing (N), an instruction for activating the application process 24 is issued to the DSM server process 23.

The DSM server process 23 manages the start and the end of the application process 24. When receiving an instruction to activate the application process 24 from the CGI execution module (dsmcgi.exe) 13, the application process 24 is activated (steps S31, 32), that fact is stored in the shared memory 14, and the standby mode is entered until a message of execution of the next process is issued (step S33).

In the CGI execution module 13, when receiving a message of a completion of activation, it is decided at step S14 that the application process 24 is in the working status and the routine proceeds to step S15.

At step S15, a message instructing the execution of the DSMCGI process 22 is sent, and the standby state is entered until the execution of the application process 24 is completed at step S16.

When receiving a message of a start of the execution of the process during the standby state (step S33), the application process 24 starts the execution of the process (step S34). When the execution of the process is ended, the results of the processing are stored in a resultant file of the file unit 6, the information concerning the status of the processing is stored in the shared memory 14, a message of the completion of processing is sent to the CGI execution module 13, and the standby mode is entered (step S35).

When receiving a message of completion of execution, the CGI execution module 13 obtains the resultant file from the file unit 6 and requests the web server 11 to send it to the client 3 (step S17). Thereafter, a message indicating that the acquisition of the resultant file is completed is sent to the application process 24, whereupon the processing is ended (step S18).

When receiving a message indicating that the acquisition of the resultant file was completed during the standby state of step S35, the application process 24 decides whether or not to automatically end the processing (step S36). As the parameter of the judgement of the automatic ending, there are for example the number of application processes residing in the memory, the elapsed time from the previous connection, and the total number of accesses from the clients 3. When the parameter exceeds a predetermined value (Y of step S36), the application process 24 is automatically ended, and the management information such as the session information stored in the shared memory 14 is cleared (step S38). Further, even in a case where the parameter is satisfied, when continuing processing from the identical user in the state holding the session, the step of the automatic ending is not executed until the next processing for which the session is not held or a request from another user comes.

When the requirement for the automatic ending are not satisfied (N of step S36), a flag of (Wait/Ready) is set (step S37) and the routine returns to step S33. Here, the system is kept on standby while continuing the activation of the application process 24 as it is until a message for execution of the next processing is sent. As the parameter of this automatic ending, there is for example the elapsed time from the start of the standby state. When this parameter is used for the automatic ending, where there is no next access issued from the client 3 even after a predetermined time has passed from the sending of the results of the processing, the automatic ending will be carried out on the server side. In the case of the automatic ending, the routine proceeds to step S38, where the application process is ended and the management information is cleared.

Next, an explanation will be made of the processing of a sub processing server 2'.

The main processing server 2 of Fig. 5 confirms the environments of the sub processing servers 2' at step S12. Here, if there is a sub processing server 2' in which the session with the client 3 currently accessed is in progress, the processing is handed over to the related sub processing server 2', where processing in the same session is carried out.

In Fig. 6, in the sub processing server 2' to which the processing was handed over manages the operation by the DSM server process 23 (step S51). The DSM server process 23 performs a predetermined write operation to the shared memory 14, then confirm whether or not the application process 24 is holding a session based on the information in the shared memory 14 (step S52).

At step S52, when the current access is the second or following access and also the session is held (Y), the routine proceeds to step S54. If the current access is the first access or, even if it is the second or following access, but the session is not held (N), the routine proceeds to step S53.

At step S53, the working status of the application process 24 is confirmed based on the information in the shared memory 14. When the application process 24 is not working (N), the application process 24 is activated (step S71). When completing the activation, the application process 24 stores that fact in the shared memory 14, send a message indicating the completion of activation to the DSM server process 23, and stands by until the message of the execution of the next process is issued (step S72).

In the DSM server process 23, when receiving the message of the completion of activation, it is decided at step S53 that the application process 24 is in the working status and the routine proceeds to step S54.

At step S54, a message instructing the start of the execution of the DSMCGI process 22 is sent, and the operation stands by at step S55 until the completion of execution of the application process 24.

When receiving the message of the start of the execution of the process during the standby state (step S72), the application process 24 starts the execution of the application process 24 (step S73).

When the execution of the processing is ended, the results of the processing are stored in the resultant file of the file unit 6 (Fig. 2), the information concerning the processing status is stored in the shared memory 14, a message of the completion of execution is sent to the DSM server process 23, and the operation enters the standby state (step S74).

When receiving the message of the completion of execution of the process during the standby state of step S55, the DSM server process 23 obtains the resultant file from the file unit 6 at step S56 and returns the resultant data to the main processing server 2, whereupon the routine returns to step S51.

In the main processing server 2 (Fig. 5), at step S17 of the CGI execution module (dsmcgi.exe) 13, it is requested to the web server 11 to send the resultant data returned from the sub processing server 2' to the client 3.

The processing after the standby state of step S74 of the sub processing server 2' (Fig. 6), that is, the judgement of the automatic ending (step S75), the processing of the ending of the application process 24 (step S77), the setting of the flag (step S76), and the standby state of the execution of the next process (step S72) is similar to the processing at the main processing server 2 of Fig. 5, so an overlapped explanation will be omitted.

Next, in the flowcharts of Fig. 5 and Fig. 6, an explanation will be made of the processing when an abnormality occurs. In Fig. 5 and Fig. 6, the flow at the time of abnormality processing is indicated by the dotted line.

In the main processing server 2 (Fig. 5), when a predetermined time has passed during the standby state of step S16, that is, when the processing of the application process is not ended even if the predetermined time has passed, a forced ending of the application process 24 is instructed to the DSMCGI process 23, and the processing is ended at step S18 and step S39. In the DSMCGI server process 23, the processing by the application process 24 is ended (step S31). In the sub processing server 2' (Fig. 6), if the predetermined time has passed during the standby state of step S55, the application process 24 is ended (step S57), and the routine returns to step S51.

According to the system explained above, the application process 24 is independent from the DSMCGI server process 23 so the processes do not interfere with each other and therefore the reliability of the entire system becomes high. Further, by making the application 15 resident in the shared memory 14 and having the requests of the web server 11 received from only small sized execution modules (dsmcgi.exe), the response becomes faster. Further, by placing the session management information in the shared memory 14, high access performance can be realized.

Further, by grouping a plurality of servers together and performing processing in a distributed manner, the load can be spread out, therefore the load to a server occurring due to simultaneous access from a plurality of clients can be reduced. Even when one of the servers cannot be used, if the other servers are working, these servers can take over the processing, therefore the security at the time of natural and man-made disasters can be raised. Further, since a plurality of small sized servers having relatively low level functions can be used as distributed servers, a reduction of the cost of the system can be achieved compared with the case where one high performance server is purchased and web management is carried out by that one server. Further, the present web application system can use different types of servers as the main processing server and the sub processing servers 2' or the plurality of sub processing servers 2', so effective utilization of the current system or current servers becomes easy, and therefore it becomes possible to flexibly construct a new system.

Above, the explanation was made above of a web application system 1 having functions of session management and distributed management based on the present invention. Next, an explanation will be made of the operation management mechanism preferably installed in the web application system 1.

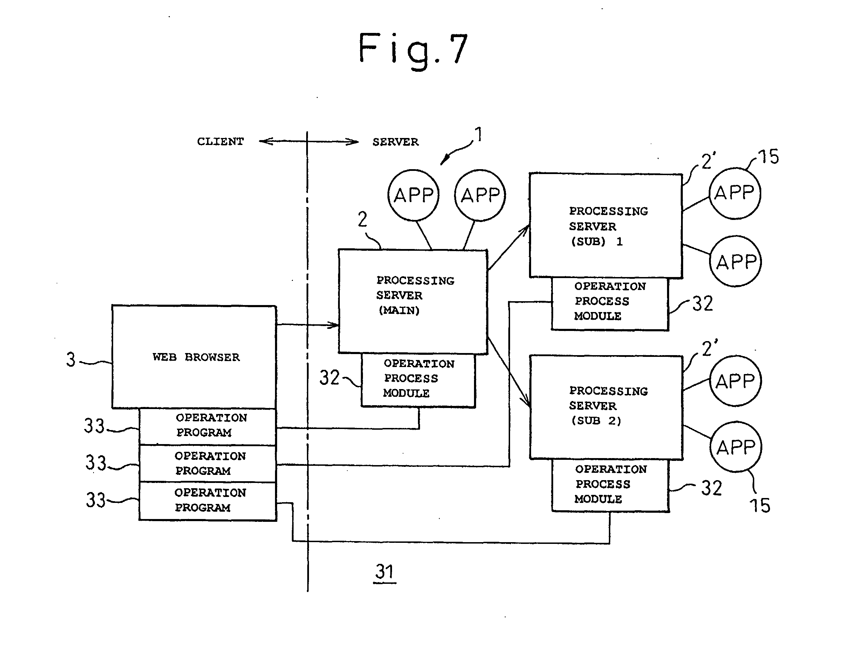

Figure 7 is a view of the basic configuration of a web application system including an operation management mechanism based on the present invention.

In the figure, 1 is a web application system similar to that explained above which comprises the main and sub processing servers 2 and 2' as servers and web browsers 3 as the clients. In the figure, one main processing server 2 and two sub processing servers 2' are shown, but the number of them may be freely set. Further, the processing servers are provided with applications (APP) to be processed based on requests from the client side.

The characteristic feature of the present invention in Fig. 7 resides in that the operation management mechanism indicated by 31 is provided to the web application system 1. The operation management mechanism 31 comprises server side operation process modules 32 for respective processing servers 2 and 2' and client side operation programs 33 provided in one-to-one correspondence with the modules 32. Each client can perform operations such as reading various types of statuses for the web application system 1 and setting the environment in real time on the corresponding web browser 3 via the corresponding operation process module 32 and operation program 33.

In Fig. 7, in the web application system 1 with such an operation management mechanism 31 applied thereto, the main processing server 2 centrally manages the accesses from the clients (web browsers 3) and assigns processing to two sub processing servers 2' by the setting information in the main processing server 2. By this, even in the case where the accesses from a plurality of clients (3) are concentrated, the load can be distributed among the sub processing servers 2', so an integrated web application system 1 can be constructed.

Here, the server side operation process module 32 of Fig. 7 will be further concretely shown.

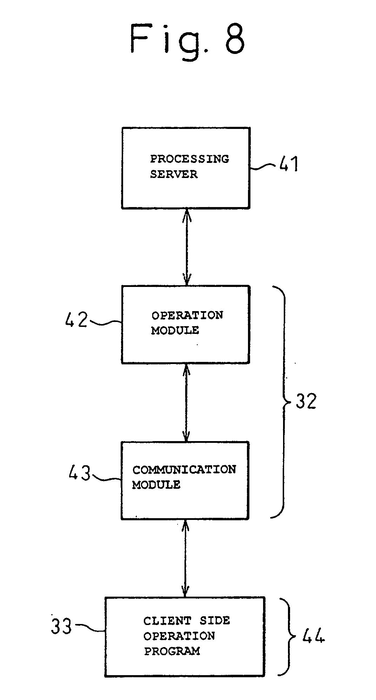

Figure 8 is a view of the concrete configuration of a server side operation process module.

In the figure, 41 is a processing server. This is a generic term referring to the main processing server 2 and sub processing servers 2' in Fig. 7. The server side operation process module 32, one of characteristic features of the present invention, is provided between this processing server 41 and a client 44 including the client side operation program 33 and comprises an operation module 42 and a communication module 43 as illustrated in the figure.

Referring to Fig. 7 and Fig. 8, the operation management mechanism 31, one of the characteristic features of the present invention, performs operations on the web application system 1 having the application (APP) to be processed by the processing server 41 based on requests from the clients. This operation management mechanism 31 is comprised of <1> the operation module 42 linked with the processing server 41 and performing processing concerning operations in accordance with instructions from a client 44 and <2> the communication module 43 performing communication for receiving the instructions from the client 44 and activation of the operation module 42 by the instructions.

Namely, the operation module 42 of <1> is linked with the processing server 41 of the web application system 1 and performs processing concerning operations on the web application system 1 in accordance with instructions from the clients 44.

On the other hand, the communication module 43 of <2> is linked with the processing server 41 of the web application system 1 and activates the operation module 42 for performing the processing concerning operations on the web application system 1 in accordance with instructions from the clients 44 and, at the same time, communicates for receiving instructions from the clients 44.

Further, as shown in Fig. 8, the operation module 42 and the communication module 43 are formed in pairs. Pairs of these are provided in one-to-one correspondence with the processing servers 41.

Thus, the operation module 42 can perform processing concerning operations by instructions from the clients 44 via the communication module 43, that is, enables each client 44 to individually execute at least one operation among for example reading the working status of the web application system 1, setting the working environment of the processing server 41, setting the working schedule of the application (APP), and analyzing the log and performance via the processing server 41.

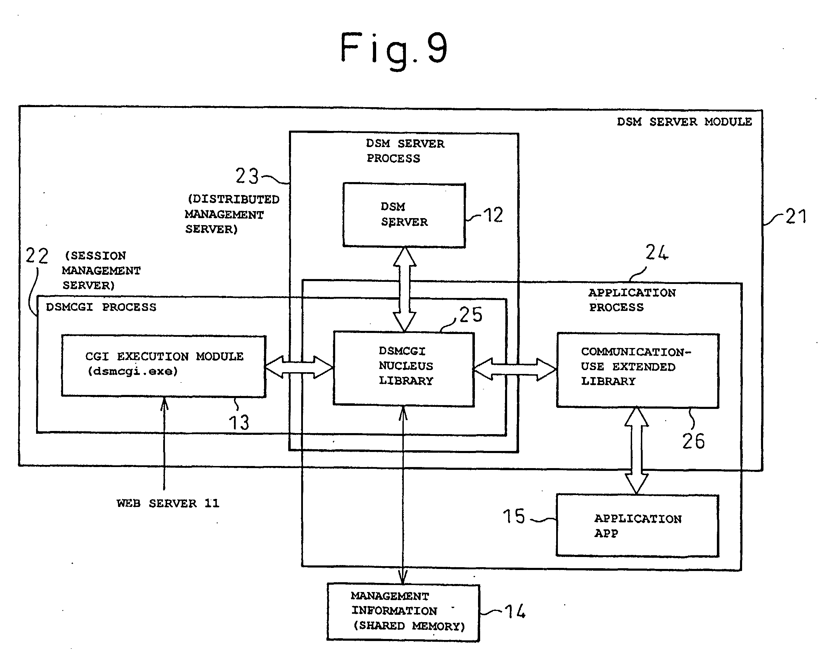

Figure 9 is a view of an example of a basic module constituting the principal portion of the web application system 1 in Fig. 7. This basic module does not include the module of the operation management mechanism 31 based on the present invention. Accordingly, it is substantially the same as in Fig. 4 explained above, but the explanation will be made again while adding additional items.

In Fig. 9, the DSM server module 21 corresponds to the processing server 41 (Fig. 8) and is formed by including the DSMCGI process 22, the DSM server process 23, and the application process 24. Note that DSM is an abbreviation of "Distributed Session Manager" as already explained and is a unit which executes and manages applications running on the server. Further, CGI is an abbreviation for "Common Gateway Interface" and is a unit which functions to receive requests from the web browsers 3 (Fig. 7), call up applications (APP), and returning the execution results to the requesting web browsers 3.

In Fig. 9, the DSMCGI process 22 is realized by a CGI execution module (dsmcgi.exe) 13 and a DSMCGI nucleus library 25. The DSM server process 23 is realized by a DSM server 12 and a DSMCGI nucleus library 25. Further, the application process 24 is realized by a communication-use extended library 26 of a specific language (specific language for running the application), a DSMCGI nucleus library 25, and an application (APP).

As the application process 24, there can be mentioned for example customer control, product order/accept of order control, and budget control. Note that the application can be used without any particular limitation while being linked with the specific language communication-use extended library 26.

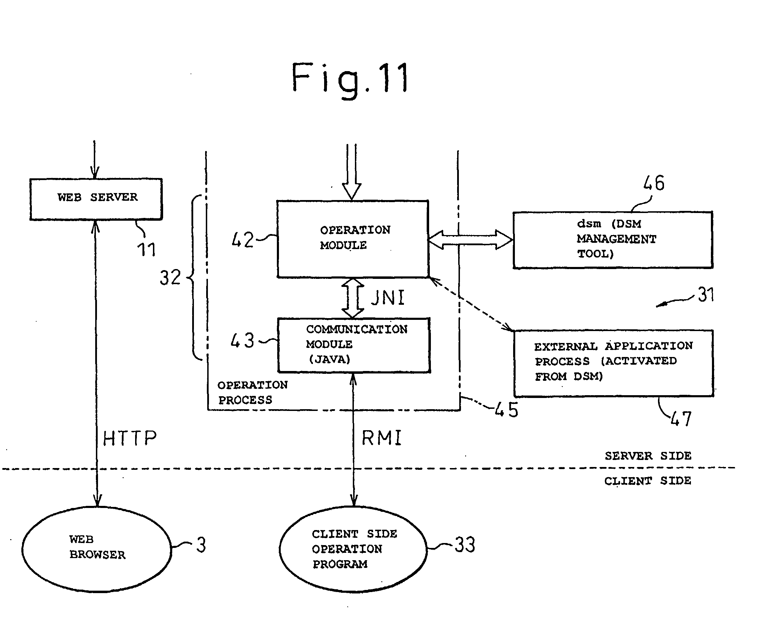

Between the web server (11 of Fig. 11) and the application (APP) are provided a DSM server 12, a CGI execution module 13 activated from the web server, and a shared memory 14. Here, the DSM server 12 is the session management server and the distributed management server as well. The CGI execution module 13 is a program for interfacing between the clients 44 and the applications (APP). Further, the shared memory 14 stores the management information such as the information concerning the distributed management and the information concerning the session management. Note that, the DSM server 12 and the CGI execution module 13 form the central components of the DSM server module 21.

In Fig. 9, the DSMCGI nucleus library 25 interfaces among the DSM server 12, the CGI execution module 13, and the shared memory 14.

The DSMCGI process 22 is comprised by the execution module 13 and the DSMCGI nucleus library 25 as described above and functions as the server for the session management together with the DSM server 12. Further, the DSM server process 23 is comprised by the DSM server 12 and the DSMCGI nucleus library 25 and functions as the server for the distributed management together with the CGI execution module 13.

In session management, the management information for the session management such as the ID of the client and the application (APP) to which the client 44 is connected are stored in the shared memory 14 through the DSMCGI nucleus library 25.

Further, in distributed management, the setting conditions such as the status of the processing server 41 (21), the confirmation of the environment of the sub processing server 2', and the relationship between the sub processing server 2' and the application for the server 2' are stored as the management information in the shared memory 14 through the DSMCGI nucleus library 25. Note that, although not illustrated in Fig. 9, the sub processing server 2' has a similar configuration to that of the module of Fig. 9 (there is no CGI execution module 13). The DSM server of this sub processing server 2' is connected to the DSM server 12 of Fig. 9 (refer to Fig. 3).

The operation management mechanism 31 cooperating with the DSM server module 21 for the integrated web application system will be explained in further detail next.

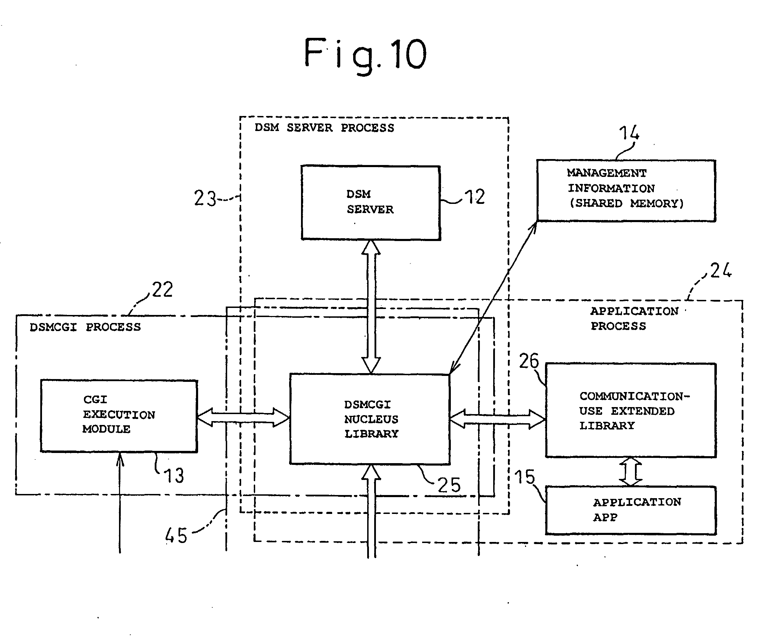

Figure 10 is a view partially showing the web application system provided with the operation management mechanism (first), and

Fig. 11 is the same view (second). Here, Fig. 10 substantially corresponds to Fig. 9. Accordingly, Fig. 11 mainly shows the operation management mechanism 31.

Referring to Fig. 11, the server side operation process module 32 constituting part of the operation management mechanism 31 and the client side operation program 33 constituting another part of the operation management mechanism 31 are shown. The server side operation process module 32 has the operation module 42 and the communication module 43.

The modules 42 and 43 forming the operation process module 32 realize the operation process 45 together with the DSMCGI nucleus library 25. The operation module 42 further can cooperate with an external application process 47.

Further, a DSM management tool 46 possesses various commands defining the operation of this operation module 42. This tool performs analysis by obtaining the status of the processing server from the operation module and returns the analysis information to the operation module.

On the left side of Fig. 11, a case where an already existing web server 11 is connected to the CGI execution module 13 (Fig. 10) on the one hand and connected to the web browser 3 by using the HTTP (Hyper Text Transfer Protocol) in the embodiment on the other hand is shown.

Looking at the server side operation process module 32 on the right side of Fig. 11, a case where the communication module 43 is realized by using the JAVA language in the embodiment, communicates with the client side by using an RMI protocol, is further connected to the operation module 42 by using a JNI protocol, and activates the module 32 is shown.

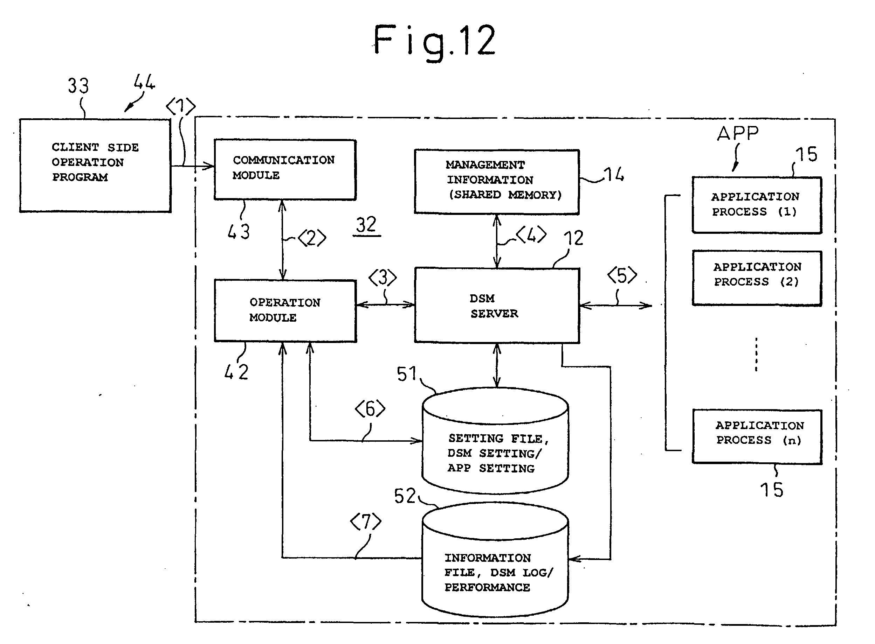

Figure 12 is a view redrawing the configuration of the principal parts of the system shown in Fig. 10 and Fig. 11 along the flow of work.

In the figure, the work flow is indicated by <1> to <7>. Note that, although not illustrated in Fig. 10, a setting file 51 and an information file 52 are newly indicated.

These files 51 and 52 will be explained in advance. The server side operation process module 32 refers to the related information written in the setting file 51 in advance at the time of activation of the processing server (DSM server 12) and the operation module 42 and executes at least one of the setting of the working environment of the processing server and the setting of the working schedule of the application (APP).

Similarly, the processing server (DSM server 12) outputs the results of the processing to the information file 52 in accordance with a request from a client. The server side operation process module 32 displays the log and performance on the monitor screen by referring to the information file 52.

Next, an explanation will be made along the flow of work <1> to <7> in Fig. 12.

At <1> of the flow of work, the client 44 and the server side communication module 43 communicate by using for example the RMI protocol.

At <2> of the flow of work, the operation module 42 is activated via the communication module 43 based on an instruction from the client side.

At <3> of the flow of work, in the case of a read operation (status monitor), the acquisition of information of the application processes ((1) to (n) on the right side of Fig. 12) is requested to the DSM server 12. (Note that, the DSMCGI nucleus library 25 is omitted.)

At <4> of the flow of work, information is transferred between the shared memory 14 and the DSM server 12 . Particularly, the content of the shared memory 14 is confirmed.

In further detail, on the server side, provision is made of the shared memory 14 linked with the processing server (DSM server 12) and storing application management information for managing various types of applications (APP). The operation module 42 obtains the application management information from the shared memory 14 and retrieves the related application process.

At <5> of the flow of work, the detailed information of the application processes (1) to (n) is obtained by the DSM server 12.

At <6> of the flow of work, when the setting of the working environment of the DSM server 12 and the setting of the working schedule of the application are carried out, the information is read and written to and from the setting file 51. The DSM server 12 refers to the working environment of the server and the working schedule of the application written in the setting file 51.

At <7> of the flow of work, when analysis of the log and performance is requested from the client side, the operation module 42 fetches the related information from the information file 52. Note that, for the analysis, the DSM server 12 receives as input information (processing results, etc.) to be written into the file 52.

Next, a description will be made of a detailed example of the operations such as reading the working status of the integrated web application system 1, setting the working environment of the processing server 41, setting the working schedule of the application (APP), and analyzing the log and performance by the operation management mechanism 31.

First, representative examples of the operations and functions of the operation management mechanism 31 are shown in the following (a) to (f).
(a) The statuses of the processing servers can be read by displaying the configuration of the processing servers 41 in the form of a tree when the client signs on.
   The relation among a plurality of processing servers to be monitored by the operation management mechanism 31 is displayed in the form of a tree on the client side display.
   By this, each user can determine, for example, which application is connected to which server at a glance.
(b) Each user having the right of control can monitor (read) the working statuses of the applications.
   The application information and the external application information for the processing server selected in the tree-like hierarchy can be provided on the display as a table.
   Further, the amount of use of the memory of the selected processing server, the usage rate, and the usage time of the CPU and the working status of the application can be seen on the display.
   Note that the statuses can be monitored in real time at predetermined sampling intervals for every user.
   The monitoring operation is useful for determination of the cause when a certain abnormality occurs in the computer processing.
(c) The working schedule of the application can be set for every user.
   Namely, the working of the application can be set in units of months, days, and hours. For example, where an accounting section of a company primarily uses an accounting application at the end of the month, it is possible to set the schedule to enable the accounting section to monopolize the use of a plurality of processing servers for that period.
(d) The log information can be analyzed for each processing server.
   From the content of the log of the processing server selected by each user, the information for every processing concerning the "activation of the DSM server 12", "stoppage of the DSM server 12", "access to the CGI execution module 13", etc. can be analyzed and shown on the display in the form of a table. For example, a graph of the cumulative total of accesses can be displayed in units of hours in a day.
(e) The performance information can be analyzed for every application of each user.
   Namely, this is analysis of the performance report. When one application is executed, the information of the flow of the application, for example, which procedure (program for executing the application) was called up, which remote database (not illustrated) was accessed, etc., is output to the display and displayed there in a tree-like hierarchy.
(f) The server environment can be set for every processing server.
   Each user can dynamically set the environment or change the environment settings for the main processing server 2 and the sub processing server 2'.
   For example, it can set an automatic ending of the application being held or a release of the holding of the session by a certain number of accesses.

As shown in (a) to (f) explained above, by using the operation management mechanism 31, users can individually easily read the working status of the integrated web application system 1, set the working environment of the processing server, set the working schedule of the application, and analyze the log and performance on the corresponding web browsers 3. The actual screens, as examples, on the display of each user will be explained along with the above (a) to (f) while referring to the drawings.

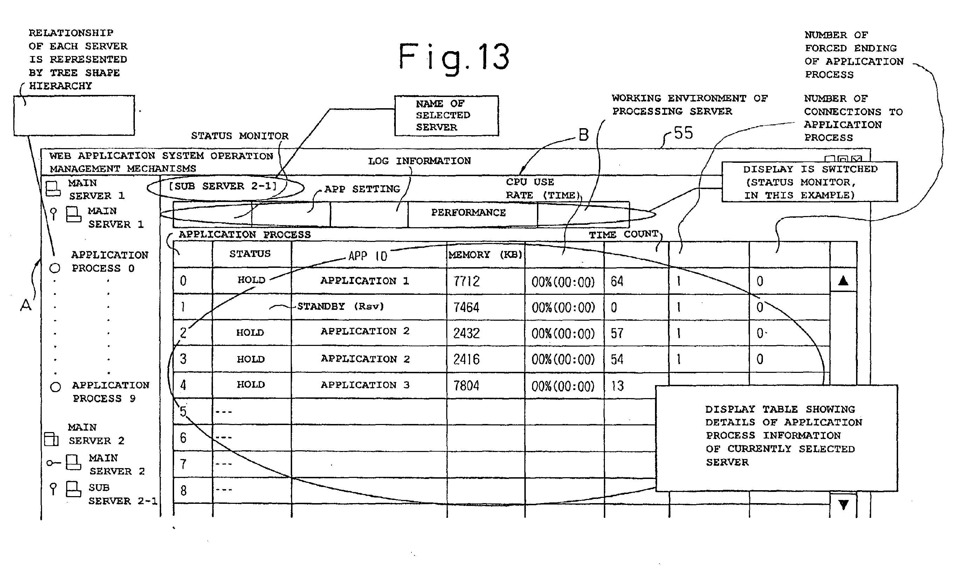

Figure 13 is a view of a first example of a screen (screen configuration) on the display (upper half), and

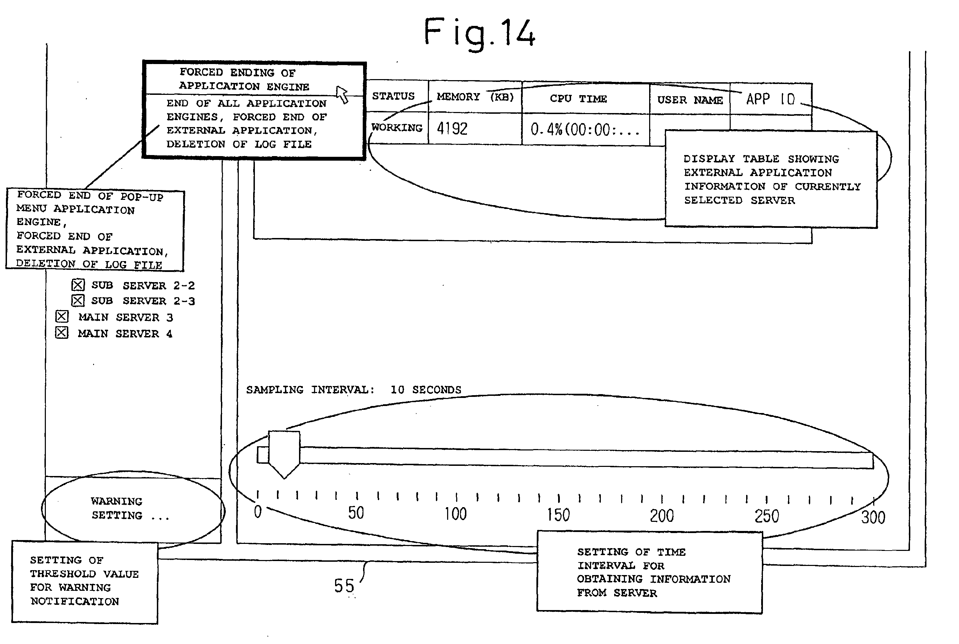

Fig. 14 is the same view (lower half).

Referring to Fig. 13 and Fig. 14, the screen 55 of the display can be roughly divided into two portions. The relationship between the main processing servers 2 and the sub processing servers 2' is displayed in the form of the tree in A on the left side. In B on the right side, information concerning the server selected at the tree screen portion A is displayed. By selectively clicking on the five tabs of "STATUS MONITOR", "APP SETTING", "LOG INFORMATION", "PERFORMANCE INFORMATION", and "WORKING ENVIRONMENT SETTING OF PROCESSING SERVER", the corresponding information is displayed.

### "STATUS MONITOR"

The session statuses of the application processes and the working states of the external applications are displayed in a table. The information is obtained from the servers and the screen 55 of the monitor status is updated at predetermined sampling intervals. As the statuses displayed, four can be mentioned, for example, hold, standby, in progress ... (not yet accessed).

### "APP SETTING"

This is for preparation of the application ID, setting the schedule information, and assigning the application ID to servers. Also, the application ID of external applications is prepared here.

Further, resources may be set (application processes reservation) for the application ID here.

### "LOG INFORMATION"

The logs of the application processes are analyzed and read here. Further, the cumulative totals of activations of application processes in a predetermined time (for example one day) are displayed in form of a graph.

### "PERFORMANCE INFORMATION"

The performance reports of the application processes are analyzed and read here. The flow of execution of the application processes is displayed in the form of a tree, that is, in a hierarchy, and the performance of each processing is displayed.

### "WORKING ENVIRONMENT SETTING OF PROCESSING SERVER"

The information of the setting file of DSMCGI is obtained or set.

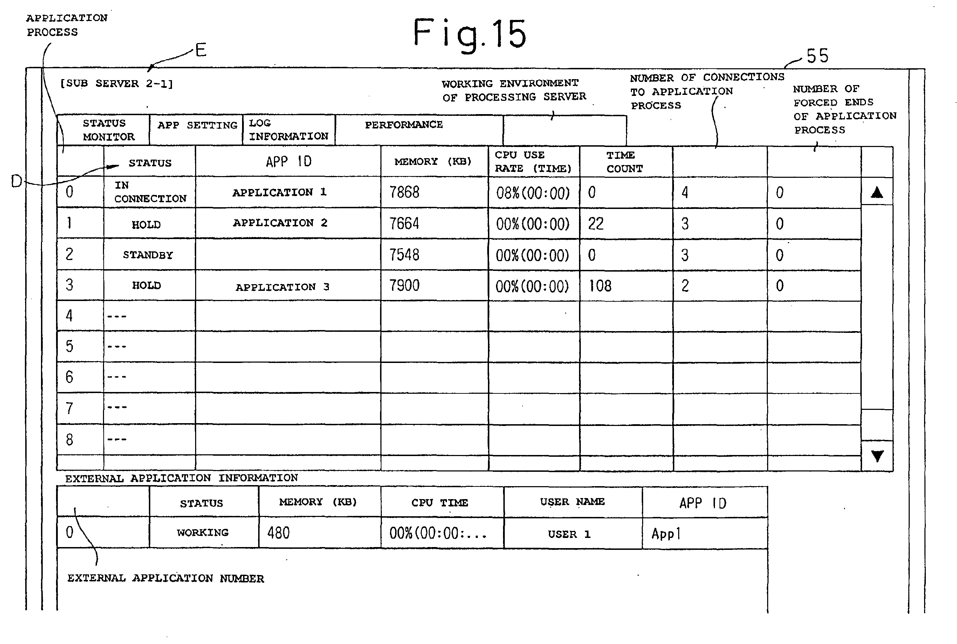

Figure 15 is a view of a second example of a screen (status monitor) on the display (upper half), and

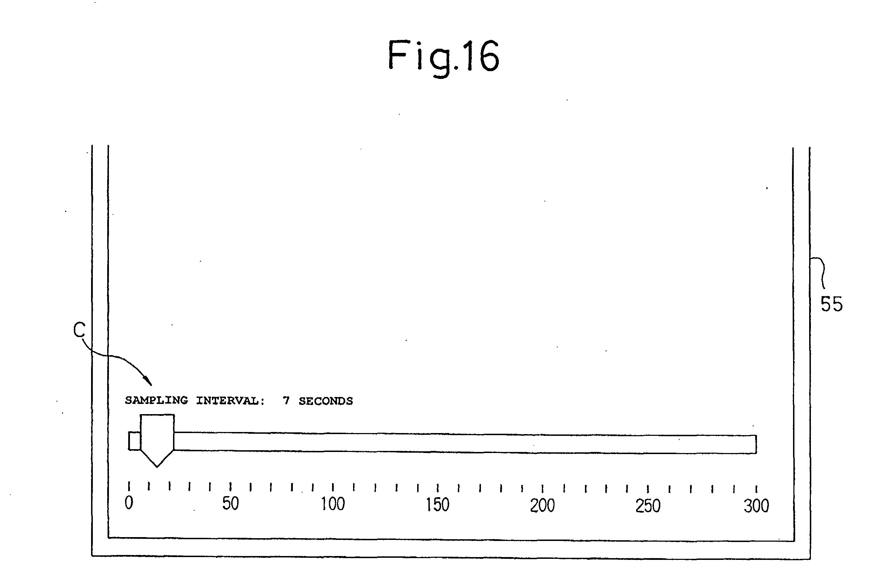

Fig. 16 is the same view (lower half). The application process information of the server selected in the tree-like hierarchy portion (A of Fig. 13) and the external application information are displayed in the form of a table. The information is updated in real time at predetermined sampling intervals (C of Fig. 16).

The main role of the status monitor (reading) is as follows.

At every predetermined sampling interval, information (application process information, external application information, memory information, log information) is obtained from the server selected by the user (server name indicated in E of Fig. 15) and the display of the screen 55 is updated.

If a warning is issued indicating that the application process is not released from the held or connected state or standby state (D of Fig. 15) or that a predetermined time has passed while occupying the CPU, the color of the words in the table is changed to for example red.

The application process session information of the currently selected server and the activating external application information are displayed in the table.

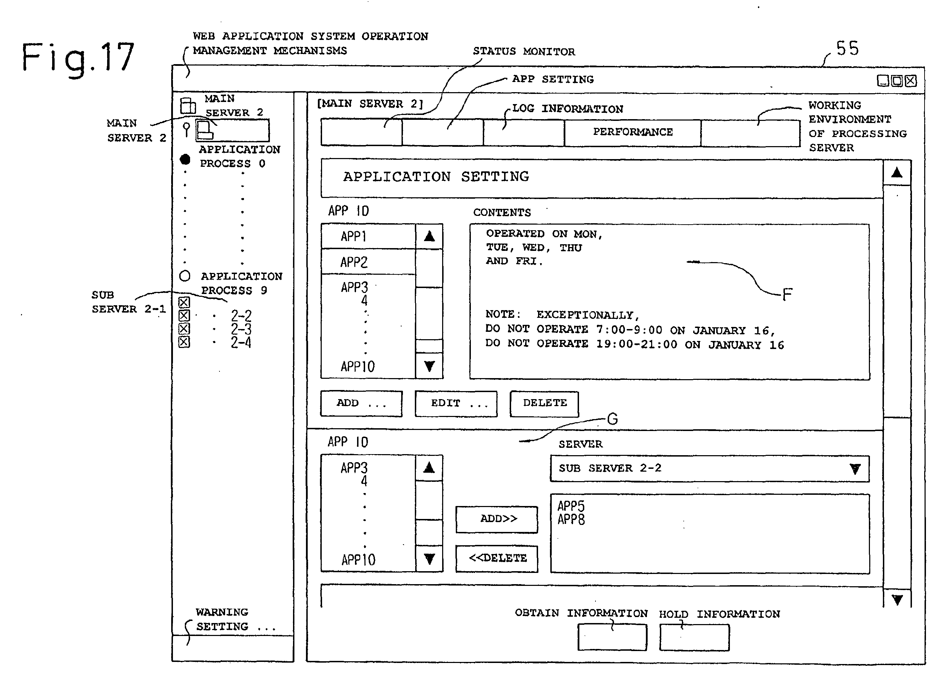

Figure 17 is a view of a third example of a screen (application setting) on the display.

This third screen shows particularly the schedule setting function among the application functions. In the portion of F of the figure, the application working schedule is set for every application ID. In the portion of G, the server affected by the set application ID is determined.

When the application to which the specified application ID is assigned is called up, it is specified by which sub server the application process is to be processed with priority.

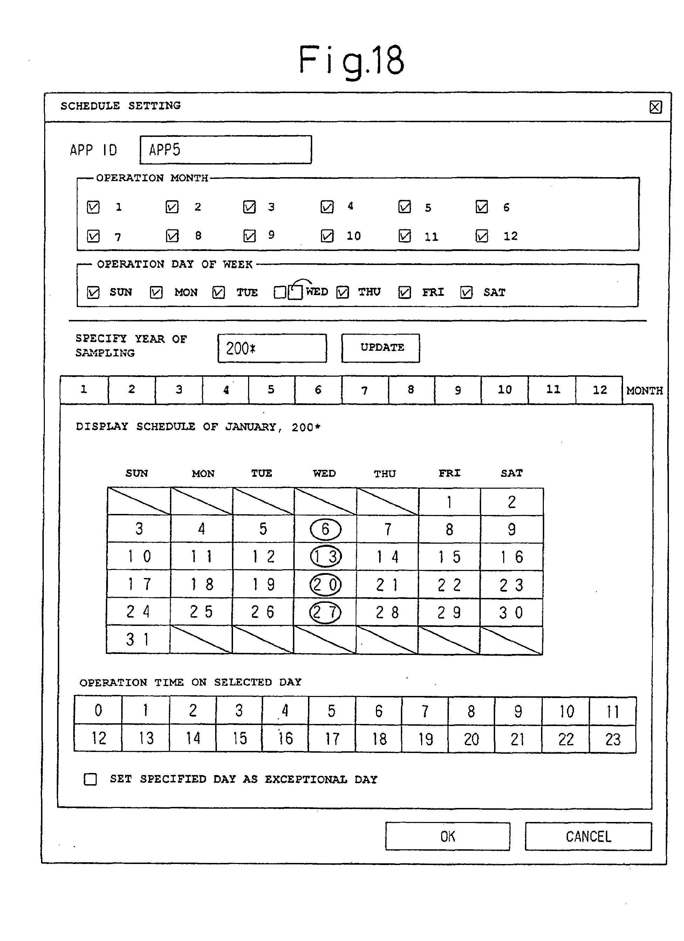

Figure 18 is a view of a fourth example of a screen (application setting) on the display.

This fourth screen shows the setting dialog displayed when depressing ADD or EDIT of the application setting screen.

When the user clicks on the window of the month or day of the week for which the application should be operated by a mouse, he can set the working schedule in a graphical environment for every date and time of each month. The example of Fig. 18 shows that the operation of the application is stopped on Wednesday.

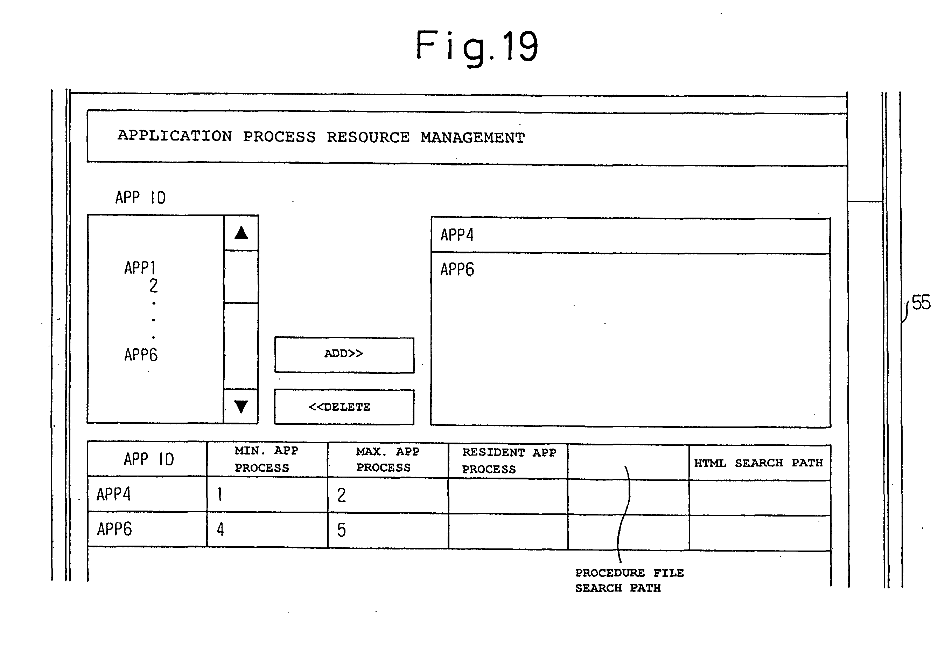

Figure 19 is a view of a fifth example of a screen (application setting) on the display.

This fifth screen shows the setting of the resources for the application process.

Namely, the user reserves the application process, specifies the procedure file search path, or specifies the HTML search path for every application ID.

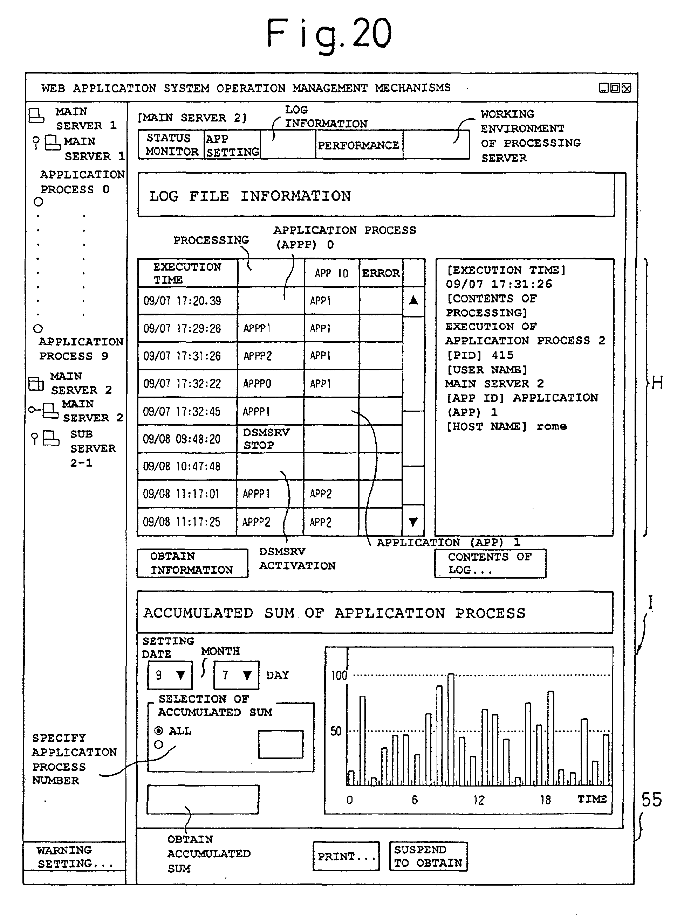

Figure 20 is a view of a sixth example of a screen (analysis of log information) on the display.

This sixth screen shows the function of analyzing the log information.

In the portion of H of the figure, the log file is divided into individual processings. These are displayed in a table form.

By referring to the log information (contents of dsmcgi.log) of the processing servers 2 and 2', the analysis results thereof are displayed on the table. Further, it is also possible to display the cumulative total of the operations of the application processes in the specified day as a graph (I).

Further, when the DSMCGI is executed, if an error occurs, the error information is displayed on the screen 55.

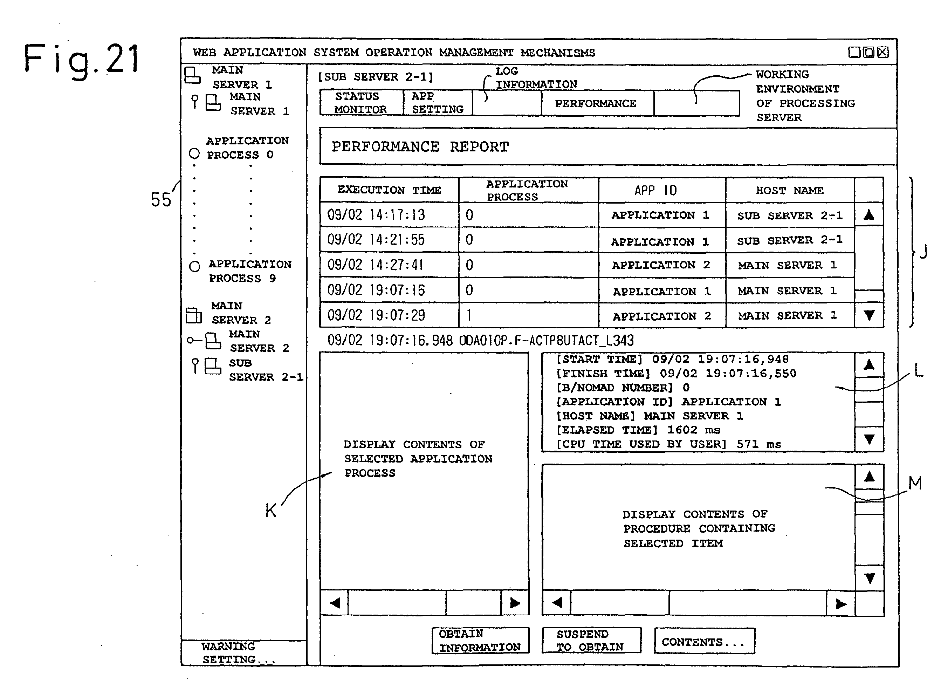

Figure 21 is a view of a seventh example of a screen (analysis of performance) on the display.

This seventh screen shows the analysis function of the performance report.

In the figure, in the portion of J, the performance report file is divided into individual processings and displayed in a table form.

In the portion of K, contents of the processing selected in the table of J are displayed in a hierarchy.

In the portion of L, detailed information for the processing selected in the portion of the K is displayed.

In the portion of M, the procedure including the processing selected in the portion of K is displayed.

By this function of analyzing the performance report, when for example a situation arises where the response is poor and a large amount of memory is consumed for a certain application process, debugging is possible by analyzing which portion in which procedure is poor in efficiency.

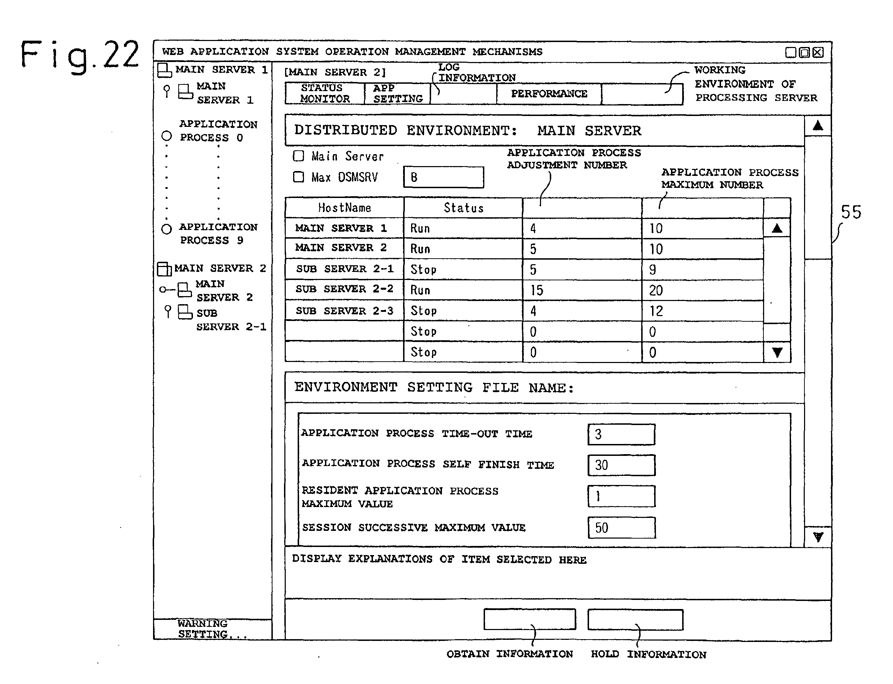

Figure 22 is a view of an eighth example of a screen (server environment setting) on the display.

In this eighth screen, the setting of the working environment of the processing server is shown. This also functions for editing the setting file 51 (Fig. 12).

In the figure, the setting of the working environment for the main processing server 2 is indicated, but it is also possible to edit the setting file (51) of each sub processing server 2'.

The working environment of the processing server is always set on this screen while referring to the information.

A user authentication function and a warning function will be additionally explained next as other functions to be provided by the operation management mechanism 31 of the present invention.

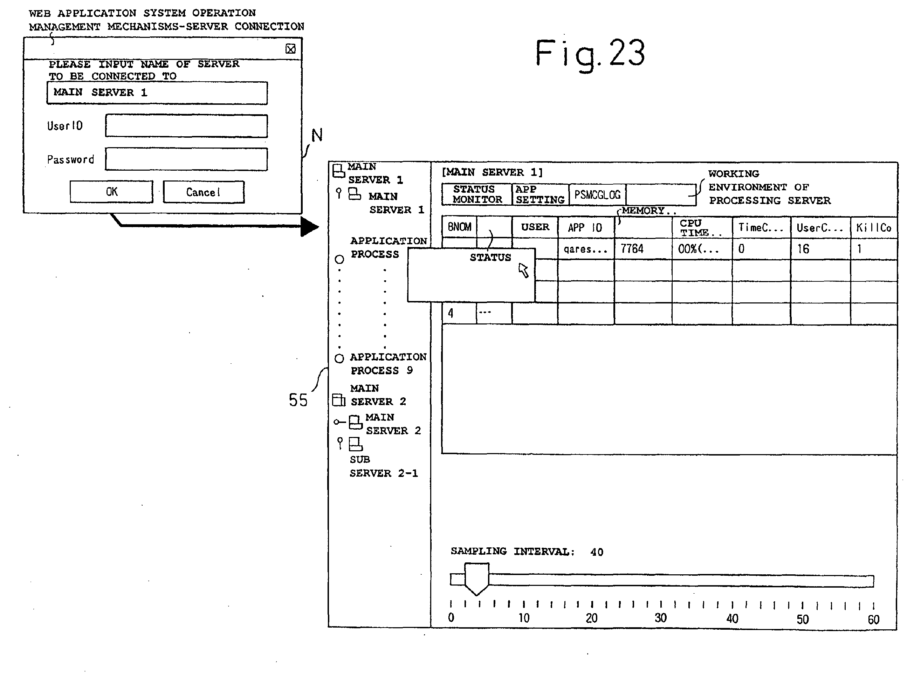

Figure 23 is a view of the screen, as an example, for user authentication on the display.

In the figure, N at the top left shows the dialog window for user authentication. If the user ID and password input to this dialog window are incorrect, the server side operation process module 32 is not activated. Note that a general user can only read the information and cannot perform active operations such as changing the working environment setting of the processing server. Only a specific user having the right to this can perform both.

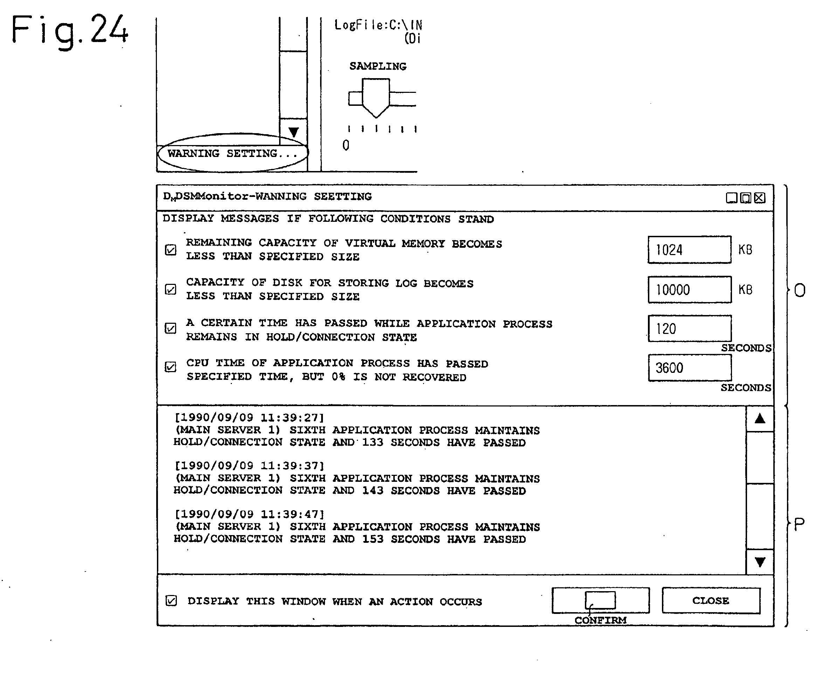

Figure 24 shows a screen, as an example, of a warning window on the display when depressing the warning setting on the bottom left of the display screen 55.

The warning can be issued by setting specific conditions, for example, a certain session continuing to be held or in progress or kept in the standby state even after the elapse of a specified time and the remaining amount of memory of the server being small.

In the figure, the portion of 0 is a portion for specifying the condition for issuing the warning, while a portion of P is a portion showing the message when a warning is issued.

Note that the present invention includes as a more preferred embodiment the integrated web application system 1 shown in Fig. 3 and Fig. 4 provided to the market with the operation management mechanism 31 embedded in it. However, its configuration becomes the same as the configuration shown in Fig. 1.

Accordingly, such a web application system is a web application system having applications (APP) to be processed by processing servers based on requests from clients 44, configured by [1] shared memories 14 and 14' provided between the web server 1 and the application processes 24 and storing information for the session management and a session management server for session management, [2] the operation modules 42 linked with the processing servers 2 and 2' and performing processing for operations on the web application system in accordance with instructions from the clients 44, and [3] the communication modules 43 for communication for receiving instructions from the clients 44 and activation of the operation modules 42 by the instructions.

In this case, the session management server desirably also has a distributed management function.

Further, as another embodiment, the invention provides a web application system having applications (APP) to be processed by processing servers based on requests from clients 44, configured by [1] a distributed management server provided between the web server and the application processes 24 and functioning for distributed management of a plurality of processing servers 41, [2] operation modules 42 linked with the processing servers 2 and 2' and performing processing for operations on the web application system in accordance with instructions from the clients 44, and [3] communication modules 43 for communication for receiving instructions from the clients 44 and activation of the operation modules 42 by the instructions.

In this case, the distributed management server desirably also has a session management function.

As described above, according to the present invention, session management is made possible by a web application system having the configuration explained by Fig. 1 to Fig. 6. Further, in the web application system, distributed management of the servers is made possible.

Further, due to the introduction of the operation management mechanism 31 explained by Fig. 7 to Fig. 24, it is possible to provide an integrated web application system comprised of a large number of processing servers each having complex and diverse applications able to be utilized by a large number of users, wherein individual users having the right of control can freely and easily perform various operations including for example reading the working status of the system, setting the working environment of the processing servers, setting the working schedule of the applications, and analyzing the log and performance in accordance with the individual statuses without introducing a large scale mechanism. Further, the secrecy of each user is completely held.

## Claims

1. A web application system characterized in that a shared memory for storing information for session management and a session management server are provided between a web server and an application process.

2. A web application system as set forth in claim 1, wherein said session management server further has a distributed management function.

3. A web application system characterized in that a distributed management server is provided between a web server and an application process.

4. A web application system as set forth in claim 3, wherein said distributed management server further has a session management function.

5. A session management apparatus for a web application system which comprises
a web server,
an application process,
a shared memory provided between said web server and said application process and for storing the information for the session management, and
a session management server.

6. A session management apparatus for a web application system as set forth in claim 5, wherein said session management server further has a distributed management function.

7. A distributed management apparatus for a web application system which comprises
a web server,
an application process, and
a distributed management server provided between said web server and said application process.

8. A distributed management apparatus for a web application system as set forth in claim 7, wherein said distributed management server further has a session management function.

9. A management server for a web application system provided between a web server and an application process, characterized in that at least one of session management and distributed management is made possible.

10. A shared memory for a web application system provided between a web server and a application process, characterized in that the shared memory stores information for session management.

11. A modular function program for performing at least one of session management and distributed management in accordance with set conditions for a request from a client in a web application system or a computer readable storage medium storing the same.

12. A web application system which is provided with an operation management mechanism for performing an operation on a web application system having an application to be processed by a processing server based on a request from a client, comprising
an operation module linked with said processing server and performing processing concerning said operation in accordance with an instruction from said client and
a communication module performing communication for receiving the instruction from said client and activation of said operation module by the instruction.

13. A web application system as set forth in claim 12, wherein said operation module executes at least one operation among reading a working status of said web application system, setting a working environment of said processing server, setting a working schedule of said application, and analyzing a log and performance via said processing server as the processing concerning said operation in accordance with an instruction from said client.

14. A web application system as set forth in claim 12, wherein said operation module and said communication module are formed as a pair and such pairs are provided in one-to-one correspondence with said processing servers.

15. A web application system as set forth in claim 13, wherein a shared memory linked with said processing server and storing the application management information for managing said application is provided, and said operation module executes a read operation by referring to said application management information.

16. A web application system as set forth in claim 13, wherein setting files linked with said processing server and said operation module are provided, and said operation module executes at least one of the setting of the working environment of said processing server and the setting of the working schedule of said application by referring to the setting files.

17. A web application system as set forth in claim 13, wherein information files for writing information linked with said processing server and said operation module in accordance with an instruction from a client are provided, and said operation module performs at least one of said analysis of a log and analysis of performance by referring to the information files.

18. An operation management mechanism for performing an operation on a web application system having an application to be processed by a processing server based on a request from a client, comprising
an operation module linked with said processing server and performing processing concerning said operation in accordance with an instruction from said client and
a communication module performing communication for receiving an instruction from said client and activation of said operation module by the instruction.

19. An operation management mechanism as set forth in claim 18, wherein said operation module executes at least one operation among reading a working status of said web application system, setting a working environment of said processing server, setting a working schedule of said application, and analyzing a log and performance via said processing server as the processing concerning said operation in accordance with an instruction from said client.

20. An operation management mechanism as set forth in claim 18, wherein said operation module and said communication module are formed as a pair and such pairs are provided in one-to-one correspondence with said processing servers.

21. An operation management mechanism as set forth in claim 19, wherein a shared memory linked with said processing server and storing application management information for managing said application is provided, and said operation module executes a read operation by referring to said application management information.

22. An operation management mechanism as set forth in claim 19, wherein setting files linked with said processing server and said operation module are provided, and said operation module executes at least one of the setting of the working environment of said processing server and the setting of the working schedule of said application by referring to the setting files.

23. An operation management mechanism as set forth in claim 19, wherein information files linked with said processing server and said operation module and writing information in accordance with an instruction from a client are provided, and said operation module performs at least one of said analysis of a log and analysis of performance by referring to the information files.

24. An operation module for a web application system characterized in that it is linked with a processing server of a web application system and performs processing concerning an operation on the web application system in accordance with an instruction from a client.

25. A communication module for a web application system characterized in that it is linked with a processing server of a web application system, activates an operation module for performing processing concerning an operation on the web application system in accordance with an instruction from a client, and performs communication for receiving an instruction from a client.

26. A web application system having an application to be processed by a processing server based on a request from a client, characterized by comprising
a shared memory for storing information for a session management and a session management server for said session management provided between a web server and an application process,
an operation module linked with said processing server and performing processing concerning an operation on said web application system in accordance with an instruction from said client, and
a communication module performing communication for receiving the instruction from said client and activation of said operation module in accordance with the instruction.

27. A web application system as set forth in claim 26, wherein said session management server further has a distributed management function.

28. A web application system having an application to be processed by a processing server based on a request from a client, characterized by comprising
a distributed management server provided between a web server and an application process and functioning for distributed management of a plurality of processing servers,
an operation module linked with said processing server and performing processing concerning an operation on said web application system in accordance with an instruction from said client, and
a communication module performing communication for receiving the instruction from said client and activation of said operation module in accordance with the instruction.

29. A web application system as set forth in claim 28, wherein said distributed management server further has a session management function.
